# EUROPEAN PATENT APPLICATION

(11) **EP 3 489 737 A2**
(43) Date of publication of application: **29.05.2019**
(21) Application number: 18176918.3
(22) Date of filing: 11.06.2018
(51) Int. Cl.: G02B 27/01, G02B 27/00

(54) **NEAR-EYE DISPLAY**

(30) Priority: 24.11.2017 EP 17203611
(71) Applicant: Optotune AG, 8953 Dietikon (CH)
(72) Inventor: Leuenberger, David, 8003 Zürich (CH); Aschwanden, Manuel, 6319 Allenwinden (CH)
(74) Representative: Schulz Junghans Patentanwälte PartGmbB

(57) **Abstract**

The invention relates to a near-eye display (1) comprising at least one curved screen (2), comprising a plurality of optical elements (3), each optical element (3) comprising a controllable central emitter (6) configured to emit light; for each central emitter (6), a corresponding collimating optics (7) comprised by the corresponding optical element (3), wherein the corresponding collimating optics (7) has an optical axis (11) and is arranged such with respect to the central emitter (6) that emitted light from the central emitter (6) is collimated and the collimated light propagates parallel to the optical axis (11) of the corresponding collimation optics (7).

The invention further relates to a method for displaying an image with the near-eye display (1).

## Description

The invention relates to a near-eye display and a method for controlling the near-eye display.

Near-eye displays are configured to be arranged at distances to the eye of a user that are below or almost below the focusing abilities of the human eye. An object located at these distances cannot be brought into focus by the human eye, i.e. the eye is not capable to focus without strain or not at all on the object. The object appears out-of-focus.

Near-eye displays therefore face the challenge to be able to display discernable, sharp images to a user despite being arranged "too" close to the eye.

This problem has been solved by placing a lens or other optical means in front of a conventional display, such that the eye can bring the image into focus.

Alternatively, light field displays have been proposed in order to solve this problem. Light field displays are configured to generate wave fronts of light that simulate wave fronts of objects that are spaced further away.

With light field displays, there is no need for the eye to (impossibly) focus on the display pixels. The pixels of a light field display are microlenses that are assembled in a microlens array. Under each microlens a small pixel-based display is located that emits a partial image of the scene to be evoked, wherein each partial image corresponds to a view of the object to be displayed at a different angle.

Light field displays therefore suffer the problem that each pixel consists of a small display itself, which in turn limits the size and resolution of the microlens pixels.

Furthermore, light field displays need to render many different sub-images for the small displays of the microlenses which results in heavy computational costs.

These problems are solved by a near-eye display having the features of claim 1 and a method for controlling such a near-eye display with the features of claim 20.

Advantageous embodiments are described in the subclaims.

According to claim 1, a near-eye display comprises at least the following components:
- At least one curved screen, comprising a plurality of optical elements, each comprising an or exactly one individually addressable and controllable central emitter, configured to emit light, particularly in the visible wavelength region;
- For each central emitter, a corresponding collimating optics comprised by the optical element, the corresponding collimating optics being configured and arranged to collimate emitted light of the central emitter, wherein the corresponding collimating optics has an optical axis and wherein the light of the central emitter is particularly emitted parallel to or on the optical axis of the corresponding optical element.

A near-eye display is particularly configured to be arranged at distances shorter than 70 mm with respect to the eye, particularly to the pupil of the eye, wherein an image can be displayed such that the user perceives the image as being in focus despite the near-eye display being arranged so closely to the eye.

Therefore, conventional screens, such as computer screens, are not considered as near-eye displays, as they are not configured to generate a sharply perceivable image to a user at such short distances.

The at least one curved screen comprises a plurality of optical elements that can be arranged in a matrix, for example in rows and columns - like pixels. In contrast to conventional screens each of the optical elements comprises a collimating optics that is configured to collimate light of a central emitter.

Each collimating optics is a device that is configured to parallelize divergent light to great extent, i.e. to minimize the degree of divergence of light by reducing the curvature of the corresponding wave fronts.

As the near-eye display is arrangeable very close to the eye and the beam diameter of emitted light of an optical element is usually small, collimation does not need to be perfect.

Also, as manufacturing tolerances and positioning accuracy is limited, the light of the central emitter might not be perfectly collimated. Furthermore, other factors can influence the collimation properties and quality, such as for example, optical aberrations and non-perfect collimating geometries of the collimating optics.

The central emitter is particularly considered to be a point source of light, wherein the central emitter can adopt at least two optically distinct and distinguishable states - for example a luminous state (on-state) and a non-luminous state (off-state). The central emitter might change colour, intensity and/or polarization upon activation (on-state) or deactivation (off-state).

In the context of the current specification, a point source is particularly a source that does not comprise the capabilities to display spatially varying emission properties, unlike a plurality of pixels.

However, the point source and thus the central emitter can be configured to emit light at different wavelengths. The central emitter can be configured to emit the different wavelengths simultaneously, for example RGB (red-green-blue).

Furthermore, the central emitter is particularly smaller than 25 µm, more particularly smaller than 10 µm, 5 µm or 1µm.

The central emitter can be addressed and controlled individually. This allows controlling the state of each central emitter independent of the other central emitters of the near-eye display.

The emitted light of the central emitter is particularly emitted with a strong wave front curvature, i.e. it is highly divergent. After the divergent light of the central emitter is collimated by the corresponding collimating optics, the collimated light propagates towards the eye of the user, where a sharp image on the retina of the eye can be formed.

The near-eye display comprises a plurality of collimating optics. Due to the curvature of the at least one curved screen and the collimating optics, each "pixel" of the screen emits collimated light at an angle defined by the positon of the collimating optics on the at least one curved screen. In order to achieve this, each optical element is particularly arranged along the surface of the at least one curved screen, wherein particularly the optical axis of each collimating optics is arranged orthogonally to a curved surface of the at least one screen.

Each central emitter in conjunction with the corresponding collimating optics can be considered as a pixel of the curved screen. However, the optical element can be configured to light only along one or a plurality of specific directions, which limits the analogy to conventional pixels.

The near-eye display is configured such that the collimated light coming from the various optical elements of the screen hits the eye, particularly the pupil, at different angles. Consequently, each light beam hits the retina at a different positon. The resulting spatial pattern on the retina can be processed by the brain such that an image is perceived.

Thus, by activating the optical elements accordingly, an image is projectable to the retina of the eye, such that a sharp image is formed.

The near-eye display according to the invention allows for a particularly slim, light and energy-efficient device for displaying images or other kinds of information.

According to an embodiment of the invention, the at least one curved screen comprises a display side and a backside, wherein the light of the central emitters is emitted on the display side.

Therefore, all the collimating optics of the screen are arranged such that collimated light is emitted towards the display side of the curved screen.

According to another embodiment of the invention, the screen - as seen from the display side - is concave.

According to this embodiment the screen can be a cylinder- or a ball segment. However also other curved, particularly concave screen geometries are perceivable. The display side is arranged on the inside of the cylinder- or ball segment.

A radius of the curved screen therefore particularly refers to the radius of the cylinder- or ball segment respectively. The term "a centre of the radius" particularly refers to the centre of the cylinder- or ball segment.

According to another embodiment of the invention, the display side - as seen from the display side - is concave, while the backside - as seen from the backside - can be accordingly convex.

The emitted light from the central emitter is particularly emitted perpendicular to a surface of the corresponding optical element that is arranged on the display side of the screen.

According to another embodiment of the invention, the near-eye-display particularly comprises two screens, wherein the near-eye display is configured such that in front of each eye, a screen can be arranged.

Alternatively but essentially identical to a near-eye display comprising two screens is a near-eye display comprising a single screen that covers the field of view of both eyes, wherein the single screen might be curved such that it mimics the embodiment of the near-eye display comprising two screens, i.e. one portion of the single screen is curved around first centre and a second portion of the single screen is curved around a second centre.

In the context of the current specification, a screen is particularly a portion comprising a plurality of optical elements that can be assigned to a field of view of one eye, while two screens are considered as two portions that essentially cover the field of view of two eyes.

For reasons of intelligibility it is not always referred to "at least one curved screen" in the specification, but sometimes only to "the curved screen", the later term explicitly comprising the feature of "at least one curved screen", particularly "two curved screens".

According to another embodiment of the invention, emitted and collimated light from each central emitter propagates along or parallel to the optical axis of the corresponding collimating optics.

Also here, the mentioned factors influencing tolerances have to be considered accordingly. The terms "along" and parallel" are to be understood particularly within the limits of the above mentioned limiting factors of manufacturing, assembling, optical aberrations and non-perfect collimating geometries of the collimating optics.

Therefore, in practise, the light might travel not exactly along or parallel to the optical axis. It is well within the meaning of the claimed subject matter that terms like "collimated", "parallel", "along" and other terms relating to the optical design of the near-eye display are understood within the limits that are known to the person skilled in the art as long as they are not specified to greater detail.

In order to generate collimated light propagating along or parallel to the optical axis of the corresponding collimating optics, each central emitter is particularly arranged on the optical axis of the corresponding collimating optics.

As the light is to be collimated by the corresponding collimating optics, the emitter is particularly arranged at a focal point of the collimating optics.

The focal point of the collimating optics can depend on the wavelength of the emitted light of the central emitter and potentially non-perfect collimating geometries of the collimating optics.

The term "non-perfect collimation geometries" particularly refers to the fact, that often times spherical collimating optics are used for collimating light rather than parabolic or aspheric, or achromatic collimation geometries.

Taking into account the manufacturing tolerances, the assembling tolerances, non-perfect collimation geometries of the collimating optics and optical aberrations, the following embodiment discloses some manufacturing tolerances within which the near-eye display might still perform sufficiently well.

According to another embodiment of the invention, each central emitter is arranged along the optical axis of the corresponding collimating optics at distance from the focal point that is less than 20% of the focal length of the collimating optics and/or wherein each central emitter is arranged in a plane extending orthogonal to the optical axis of the corresponding collimating optics, wherein the distance in said orthogonal plane from the central emitter to the optical axis is less than 10% particularly less than 5% of the focal length of the corresponding collimating optics.

This embodiment essentially teaches a volume for arranging the central emitter around the focal point of the corresponding optics within which emitted light is sufficiently well collimated and propagates sufficiently parallel to the corresponding optical axis of the collimating optics for the purpose of the invention.

According to another embodiment of the invention, each optical element further comprises individually addressable and controllable side-emitters arranged around the central emitter, particularly wherein emitted light of the side-emitters is collimated by the corresponding collimating optics, and particularly wherein the light from the side-emitters is collimated by the corresponding collimating optics to a lesser degree than emitted light of the central emitter, and particularly wherein emitted light of the side-emitters propagates at an angle with respect to the optical axis of the corresponding collimating optics.

According to this embodiment, the side-emitters can be addressed controlled individually and independently of each other. As the side-emitters are arranged not in the focal spot and potentially not in the focal plane of the corresponding collimation optics, the light of the side-emitters can therefore be less collimated or less focussed than the light of the corresponding central emitter.

However it is possible to arrange the side-emitter in the focal plane of the collimating optics such that the emitted light is collimated to the same degree as the light from the central-emitter.

The side-emitters particularly are arranged laterally shifted to the optical axis of the collimating optics and the central emitter of the corresponding collimating optics and are thus arranged in the same optical element as the central emitter.

The side-emitters are also considered point-light sources according to the definitions given for the central emitter. The side-emitters can also be configured to emit light at different wavelengths, particularly simultaneously - like the central emitter. Regarding the size and dimensions, the side-emitters can be identical or similar to the central emitter.

The additional light emitted from the side-emitters leads to a more realistic and natural viewing experience for the user.

The light from the side-emitters particularly hits the retina outside an area on the retina responsible for sharp central vision. The area of sharp central vision has a comparably high angular resolution while the periphery of said area has a lower angular resolution. The area of sharp central vision is located opposite the pupil, while the periphery extends concentrically around said area.

According to another embodiment of the invention, the side-emitters are arranged in a plane extending orthogonal to the central emitter of the corresponding collimating optics.

The side-emitter can provide light that is not focused on the retina, and that enters the pupil at various different angles.

According to another embodiment of the invention, the side-emitters are arranged in a predefined pattern around the central emitter, wherein the side-emitters are arranged such that emitted light of the side-emitters, after passing the corresponding collimating optics, propagates at predefined angles with respect to the optical axis of the corresponding collimating optics, when the light leaves the corresponding optical element.

The predefined pattern is particularly designed such that the light is emitted from the corresponding collimating optics in multiples of a predefined angle, particularly while the light beams of the side-emitters are still spatially overlapping.

This embodiment allows for a near-eye display that provides light beams hitting the pupil at different angles. This situation corresponds well with real-world objects that are perceived by the eye.

For this reason, neighbouring optical elements are often times configured as clusters, wherein each cluster is configured to provide light beams emitted from side-emitters, wherein the light beams cover a broad range of angles, while the light beams are overlapping at the pupil of the eye and therefore are able to enter the eye.

According to another embodiment of the invention, a pattern in which the side-emitters are arranged with respect to the optical axis of the corresponding optical element and particularly the distances of the side-emitters to the optical axis of the corresponding optical element is/are different for adjacent optical elements on the screen.

Accordingly, the side-emitters of adjacent optical elements are at different distances to the optical axis of the corresponding collimating optics.

This embodiment allows for an increased coverage of different angles at which the light from the side-emitters from the cluster is emitted.

According to another embodiment of the invention, the at least one curved screen, particularly the near-eye display in the area where the screen is located, is transparent or semi-transparent in the visible wavelength range such that light can propagate from the backside of the screen to the display side of the screen.

The term "semi-transparent" refers to the optical property of a component of being not fully transparent, but also partially reflective or absorptive.

A transparent optical element can for example comprise transparent contacting electrodes for the central emitter and the side-emitters. Furthermore, the optical element and particularly the collimating optics can comprise transparent or semi-transparent compounds only, or compounds whose size is negligibly small such that the transparency of the screen remains unaffected.

ITO, indium tin oxide, can be used for electrical contacts and wiring in the curved screen. Alternatively or additionally, electrically conducting polymers, carbon nanotubes, and/or graphene can be used for contacting and controlling the emission properties of the central emitter and/or the side-emitters.

According to another embodiment of the invention, each optical element comprises a transparent glass or a transparent polymer, such as a polycarbonate or PMMA [CAS-Number: 9011-14-7].

Polymeric optical elements are comparably facile to manufacture and can provide the desired optical properties for the collimating optics.

According to another embodiment of the invention, each collimating optics comprises or is a, particularly semi-transparent, concave mirror, wherein the concave mirror comprises or consists of a reflective, particularly a semi-transparent reflective layer comprised by or fully embedded in the optical element, particularly in the transparent polymer or glass.

Each concave mirror is oriented with its concave surface towards the display side of the screen, so that collimation of the central emitter and/or the side emitters is achieved by back-reflection of the light emitted by the corresponding central emitter and/or side-emitter.

The concave mirror can be embedded in the transparent polymer or glass of the optical element, wherein the transparent polymer or glass has the same refractive index on both sides of the reflective layer.

In case the mirror is completely reflective - as opposed to semi-transparent - the near-eye display can be used as a virtual reality (VR-) device. In VR-devices surrounding light is kept off the user's eye.

In case the mirror is semi-transparent, the near-eye-display can be used as an augmented reality (AR-) or mixed reality (MR-) device. In AR- and MR devices the surrounding light and the surrounding environment is usually still visible to the user. The semi-transparent, reflective layer allows a fraction of the surrounding light to traverse from the backside of the screen towards the display side of the screen, while another fraction is being back-reflected by the semi-transparent layer.

The semi-transparent, reflective layer can comprise or consist of a dielectric layer or a metal such as aluminium.

According to another embodiment of the invention, the curved screen and particularly each optical element is configured such that a wave front of light traversing the optical element, i.e. entering and exiting on different sides of the screen, for example entering on the backside and exiting on the display side of the curved screen, remains unaltered or largely unaltered. The refractive power of the curved screen due to its homogeneous thickness can be neglected.

The curved screen can comprise a plurality of optical elements that exhibit equally curved and particularly quasi-planar surfaces on the backside and the display side of the screen. Due to the equally curved surfaces of the optical elements, the fraction of light that is transmitted by the semi-transparent, reflective layer can pass through the screen from the backside to the display side without its wave fronts being significantly distorted or altered, such that the optical perception of the surroundings remains unaffected or largely unaffected. The traversing light rays will not experience focussing or defocussing by the screen and thus the optical impression of the surrounding will remain unaffected. The transmitted light might appear slightly darker, due to the back-reflected fraction of the light. Particularly as the semi-transparent, reflective layer is comprised in the optical element, the surfaces of the optical element can be formed equally curved or quasi-planar such that they do not cause a focussing or defocussing effect on the traversing light.

The effect of retaining the optical impression of the surroundings cannot be achieved with optical elements that are lenses, i.e. with refracting elements but only with reflective elements such as mirrors.

According to another embodiment of the invention, each collimating optics is or comprises a collimating lens that is formed by the polymer, wherein particularly the backside of the curved screen is non-transparent and/ or light tight.

With lenses for the collimating optics particularly virtual reality (VR-) displays can be realized, where the absence of light or any optical information from the surrounding is desired or necessary.

According to this embodiment, the lenses are particularly convex or plano-convex lenses, wherein the convex surface is particularly formed by an interface between the transparent polymer and the surrounding air. The convex surface is particularly facing towards the display side.

According to another embodiment of the invention, the central emitter and/or each side-emitter of each optical element is an OLED, a QLED, a quantum dot, or an LED or any other electrically controllable light emitting element.

Such emitters can be manufactured in large numbers, and can be arranged directly in the optical element, i.e. particularly omitting light guiding devices.

The central emitter and/or the side-emitters are particularly electrically contacted by transparent electric structures, such as ITO-electrodes or an electrically conducting polymer.

An OLED is an organic light emitting diode (LED), while LEDs are typically considered as inorganic light emitting diodes. QLEDs also referred to as QD-LEDs are LEDs based on quantum dots.

The central emitter and/or the side-emitter can be a light emitting structure, such as a colloidal nanocrystal, a molecular assembly, a molecule or a more complex structure that is capable of light emission and whose light emission can be controlled, particularly by applying an electrical field or electricity to the emitter.

Additionally, the central emitter and/or the side-emitters are sufficiently small in diameter, particularly smaller than 10µm, more particularly smaller than 5µm, more particularly smaller than 1µm.

According to another embodiment of the invention, the curved screen is cylindrical or spherical and has a radius that is between 70 mm and 7 mm, particularly wherein the radius is between 40 mm and 30 mm.

The curved screen having a radius within the limits of this embodiment can be worn at distances to the eye that are within the same range.

The curved screen particularly covers a solid angle of 100° and in particular 160°. This allows two screens to be arranged in front of each eye, while covering a large or the complete field of view of each eye.

According to another embodiment of the invention, each optical element comprises more than 3, particularly 4, 8, 15 or 24 side-emitters and one central emitter, such that each optical element is capable of emitting light in a range of divergent light beams and/or angles with respect to the optical axis of the collimating optics of the corresponding optical element. Also, it is possible to arrange a plurality of side-emitters in the optical element, wherein at least a fraction of the side-emitters emits light in a different wavelength.

The side-emitters can be arranged around the central emitter in various distances, wherein the distance is particularly such that the light emitted from the side-emitter encloses an angle greater than 4.5° with the optical axis of the collimating optics.

According to another embodiment of the invention, the pitch of the optical elements of the curved screen is between 5µm and 100 µm, particularly between 10 µm and 50 µm.

Optical elements that are arranged at pitches within the above range allow on the one hand to fit a sufficiently high number of optical elements in a segment of the screen, such that image generation is possible with reasonable resolution or even within the angular resolution limit of the eye and on the other hand to provide optical elements that are sufficiently large such that contacting electronics, the central emitter and particularly the side-emitters can be arranged in the optical element.

According to another embodiment of the invention, the near-eye display comprises an eye-tracking device, wherein the eye-tracking device is configured to estimate a position and direction of gaze of the eyes, particularly the pupil, particularly wherein the screen is configured to address selected central emitters and/or selected side-emitters of a plurality of optical elements of the screen, wherein the selected central emitters and/or side-emitters are the emitters of the curved screen, whose light enters the pupil of the corresponding eye.

With the eye-tracking device the position and direction, i.e. direction of gaze, of the eye and/or the pupil of the user can be estimated. Additionally, the eye-tracking device can be adapted to determine a pupil size of the eye. From these parameters a field of view associated to the eye can be determined.

The information of the eye-tracking device can be used to activate only a selected region of the screen. This way, it is possible to reduce the energy consumption and data rate of the screen, as portions of the screen whose optical elements would emit light that does not enter the eye can be switched off.

An eye-tracking device (also referred to as eye-tracker) measures the position of the eye for example (i) by determining a movement of an object such like a special contact lens attached to the eye, (ii) by optical tracking without direct contact to the eye, and (iii) by determining electric potentials using electrodes placed around the eyes.

The eye-tracker in (i) facilitates eye tracking via an attachment to the eye, such as a special contact lens with an embedded mirror or magnetic field sensor, and the movement of the attachment is measured with the assumption that it does not slip significantly as the eye rotates. Measurements with tight fitting contact lenses have provided extremely sensitive recordings of eye movement, and magnetic search coils are the method of choice for researchers studying the dynamics and underlying physiology of eye movement. It allows the measurement of eye movement and position in horizontal, vertical and torsion directions.

The second category (ii) uses some contact-free, optical method for measuring eye motion and position. Light, typically infrared, is reflected from the eye and sensed by a video camera or some other specially designed optical sensor. The information is then analysed to extract eye rotation from changes in reflections. Video-based eye trackers typically use the corneal reflection (the first Purkinje image) and the centre of the pupil as features to track over time. A more sensitive type of eye tracker, the dual-Purkinje eye tracker uses reflections from the front of the cornea (first Purkinje image) and the back of the lens (fourth Purkinje image) as features to track. A still more sensitive method of tracking is to image features from inside the eye, such as the retinal blood vessels, and follow these features as the eye rotates. Optical methods, particularly those based on video recording, are widely used for gaze tracking and are favoured for being non-invasive and inexpensive.

The third category (iii) uses electric potentials measured with electrodes placed around the eyes in order to determine the eyes position and orientation, i.e. the gaze direction. The eyes are the origin of a steady electric potential field, which can also be detected in total darkness and if the eyes are closed. The third category offers a very light-weight approach that, in contrast to current video-based eye trackers, only requires very low computational power, works under different lighting conditions and can be implemented as an embedded, self-contained wearable system.

According to another embodiment of the invention, the near-eye display is configured to be arranged such in front of an eye of a user that a centre of a radius of the curved screen and the centre of the corresponding eye ball in front of which the screen is arranged are either coinciding or are arranged not more than 10mm, particularly not more than 5mm, more particularly not more than 1mm apart from each other.

The centre of the radius of the curved screen particularly refers of the centre of a curved screen that comprises a spherical or cylindrical display side according to an embodiment of the invention disclosed above.

Accordingly, when the near-eye display comprises two screens, each located in front of one eye, the respective centres of the two screens coincide with or are arranged within the 10 mm, 5 mm or 1 mm range of the respective centres of the eyes balls.

At these distances the field of view is in a suitable range, particularly within 8° to 25°, and also the pitch of the optical elements is within a suitable range, as for example defined above.

According to another embodiment of the invention, the distance of the screen to the eye and particularly the distance of the display surface of the screen to the cornea of the eye is between 0 mm and 70 nm, particularly between 25 mm and 40 mm.

According to another embodiment of the invention, the field of view for the collimated light emitted by the central emitters of the optical elements is between 8° and 40°.

According to another embodiment of the invention, only selected optical elements are activated for displaying an image, wherein the selected optical elements of the curved screen are within a field of view of the users eye or eyes, wherein the field of view is particularly a solid angle originating at the eye between 8° and 40° and being centred along the direction of gaze.

The field of view and the solid angle can be determined by the eye-tracking device, particularly by estimating the pupil size of the eye.

If the pupil is narrow, i.e. in the range of 2 mm to 2.5 mm the field of view is comprised in a comparably small solid angle, wherein if the pupil is open, i.e. in the range of 4 mm to 8 mm the field of view is correspondingly wider.

According to another embodiment of the invention, the near-eye-display is a contact lens or is comprised in a contact lens. A contact lens can be worn directly on the eye with no air between the display and the eye.

The problem according to the invention is furthermore solved by a method for controlling a near-eye display according to the invention, comprising the steps of:
- Estimating a field of view, particularly for both eyes, of a user looking at the near-eye display;
- Activating central emitters and particularly the side-emitters of the at least one curved screen that are within the field of view of the corresponding eye;
- Particularly projecting an image or a visual pattern on the retina with the activated central-emitters and/or the activated side-emitters.

Activating the central emitter and/or side-emitters, particularly involves the process of controlling selected central emitters and/or side-emitters such that the emitters do or don't emit light depending on the desired image to be displayed. In contrast to activated emitters, un-activated emitters are particularly constantly in the off-state until they become activated. Upon activation, the emitters can be switched from the off-state to the on state and vice versa. Only activated emitters can contribute to the projection of the image to the retina.

An image in the sense of the specification refers to any visual pattern that is displayable with the near-eye display. An image can be single spot, text or other kinds of visual information. The term "image" is to be understood in a broad sense.

According to another embodiment of the invention, only selected central and/or selected side-emitters activated, wherein the selected central emitters and/or selected side-emitters are arranged in at least one portion of the screen from where emitted light from the respective emitters can enter the eye through the pupil of the eye and be projected on the retina.

This embodiment allows for a reduction in energy consumption and also a reduction in data rate, as only selected emitters are activated and emitters whose light would not enter the eye remain un-activated.

In this context, the field of view is particularly given by the portion of the screen from which light emitted by the central emitters can enter the eye through the pupil of the eye and be projected on the retina.

The field of view comprises at least the fovea of the eye - the region of sharp vision. Around the field of view a peripheral vision portion is arranged, where peripheral vision takes place.

Therefore, the light of said selected emitters hits particularly the fovea and/or the peripheral vision portion of the eye. The selected emitters can be located in part outside the field of view.

The field of view depends on the size of the pupil, the direction of gaze and the distance of the screen to the eye. The field of view's size is particularly between 8° and 40°, wherein the position on the screen of the field of view can be determined by the eye-tracking device.

According to another embodiment of the invention, the field of view is estimated from an estimated position and gaze direction of the eyes, particularly the pupil, wherein the eye position is estimated by the eye-tracking device, wherein the eye-tracking device particularly tracks the fovea of the eye. The position the eye is looking at on the screen can be determined by the vergence of the two eye balls.

According to another embodiment of the invention, only a portion of the side-emitters, particularly a portion of the selected side-emitters whose light hit the clear aperture of the pupil, are activated, wherein the portion of the particularly selected side-emitters comprises side-emitters that are necessary to project an image onto the retina with an angular resolution that is 10-times, 100-times or 400-times lower as compared to an image that is projectable with all side-emitters within the peripheral vision portion and/or the field of view being activated.

Therefore, particularly only selected side-emitters of every 10^{th}, 100^{th,} or 400^{th} optical element are activated.

Alternatively, only every 10^{th}, 100^{th,} or 400^{th} selected side-emitter is activated

As the light from the side-emitters particularly hits the retina outside the area on the retina responsible for sharp central vision (which is located centrally on the retina), it is sufficient to project only a comparably low resolution image to the periphery of said area. This is because in the periphery the angular resolution of the eye is lower than in the area of sharp central vision. This portion outside the sharp central vision is referred to as peripheral vision portion. By activating only selected side-emitters that generate a low resolution projection on the periphery of the area of sharp central vision, no visual deterioration of the image quality will be perceived by the user but energy consumption of the near-eye display can be reduced due to a reduced number of activated side-emitters.

According to another embodiment of the invention, an image is displayed at least within the field of view or the at least one portion of the screen from where emitted light from the selected central and selected side-emitters can enter the pupil, i.e. the peripheral vision portion and the field of view, wherein an in-focus portion and an out-of-focus portion of the image are determined from the image, wherein the out-of-focus portion is digitally blurred before the image is displayed.

The out-of-focus portion can comprise features of the image that are considered to be further away in the background or for another reason out-of-focus for the user, wherein the in-focus portion can comprise features of the image that are considered to be in focus and that should be displayed in focus to the user.

This way, artificial depth information can be generated and a realistic viewing experience can be created.

Considering the dimensions of the optical elements, the diameter of each collimated light beam is comparably with respect to the pupil diameter.

Therefore each collimated light beam underfills the pupil, such that a focus change of the eyes lens has a negligible effect in the spot size on the retina of the respective beam from the respective optical element. This means that independent of the focus state of the eyes lens, the projected image is always sharp. For this reason digital blurring of an image can contribute to a natural perception.

For this reason the method according to the invention can comprise a computer program with computer program code that, when executed on a computer, digitally blurs the out-of-focus portion.

According to another embodiment of the invention, the out-of-focus portion corresponds to regions in the image that are not considered to be in focus distance of the eye, i.e. for example regions that are virtually located too close to the eye in the virtual space.

According to another embodiment of the invention, the focus position of the eyes is estimated and the in focus portion is at the focus position of the eyes, wherein the out-of-focus portion is particularly anywhere else in the image.

This embodiment allows the provision of a realistic viewing experience to the user. Depending on where the user looks and focuses, the displayed image is in focus, while particularly the rest of the image is delivered seemingly out-of-focus.

Further features and advantages of the invention shall be described by means of a detailed description of embodiments with reference to the Figures, wherein it is shown in
- Fig. 1: a near-eye display according to the invention;
- Fig. 2: an optical element with a central emitter;
- Fig. 3: an optical element with side-emitters;
- Fig. 4: a schematic drawing illustrating the illumination of the retina by the central emitters and the side emitters;
- Fig. 5A+B: a schematic illustration of clusters of optical elements;
- Fig. 6: an illustration regarding the field of view;
- Fig. 7: the field of view with respect to the gaze direction of the eye;
- Fig. 8: a lens-based near-eye display;
- Fig. 9: a near-eye display configured as a contact lens;
- Fig. 10: a near-eye display comprising two screens;

The Figures are not to scale.

### Examples and preliminary considerations

The near-eye display 1 according to the invention has at least one curved screen 2 that comprises a plurality of optical elements 3, each optical element 3 comprising a central emitter 6. A single optical element 3 can be considered as a pixel of the curved screen 2. In the following a pixel refers to the optical element 3 comprising the central emitter 6 and particularly a plurality of side-emitters 8 as well as a collimating optics 7.

The angular eye resolution (AER) of the human eye is approximately 1/60° or 0.0003 radians, which corresponds to 30 cm at a distance of 1 km.

The field of view 109 of the eye 100 is the area where simultaneous perception is possible. This area is about 160° x 175°.

When combining these values, a resolution limited display would have 60 pixels / ° x 160 ° x 60 pixels / ° x 175° = 9.600 pixels x 10.500 pixels.

However, due to diffraction and other effects, also a display with 20 pixels per degree (20 pixels / °) will be perceived as being beyond angular eye resolution (AER). With an AER of 20 pixels per degree, the resulting display comprises 3.200 pixels x 3.500 pixels.

Depending on the assumed AER - 20, 40 or 60 pixels per degree - and the radius r of the at least one curved screen 2 of the near-eye display 1, the pitch d between pixels can be calculated according to the formula *d =* 2**r***π* / 360/ AER. The results are listed in Table 1.

| ***Table 1*** | | | | |
|---|---|---|---|---|
| ***AER*** = **20 pixels / degree** | | | | |
| *r* [mm] | 20 | 30 | 40 | 50 |
| *d* [µm] | 17.45 | 26.18 | 34.91 | 43.63 |
| | | | | |

| ***AER* = 40 pixels / degree** | | | | |
|---|---|---|---|---|
| *r* [mm] | 20 | 30 | 40 | 50 |
| *d* [µm] | 8.73 | 13.09 | 17.45 | 21.82 |
| | | | | |

| ***AER* = 60 pixels / degree** | | | | |
|---|---|---|---|---|
| *r* [mm] | 20 | 30 | 40 | 50 |
| *d* [µm] | 5.82 | 8.73 | 11.64 | 14.54 |

From table 1 the maximum dimensions of the optical elements 3 for different AERs and radii *r* of the curved screen can be determined, as the optical element 3 cannot be larger than the pitch *d*.

### Figure Description

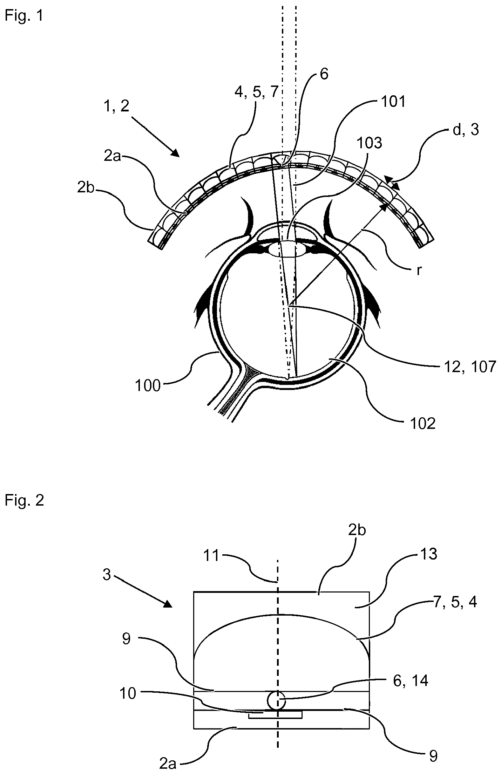

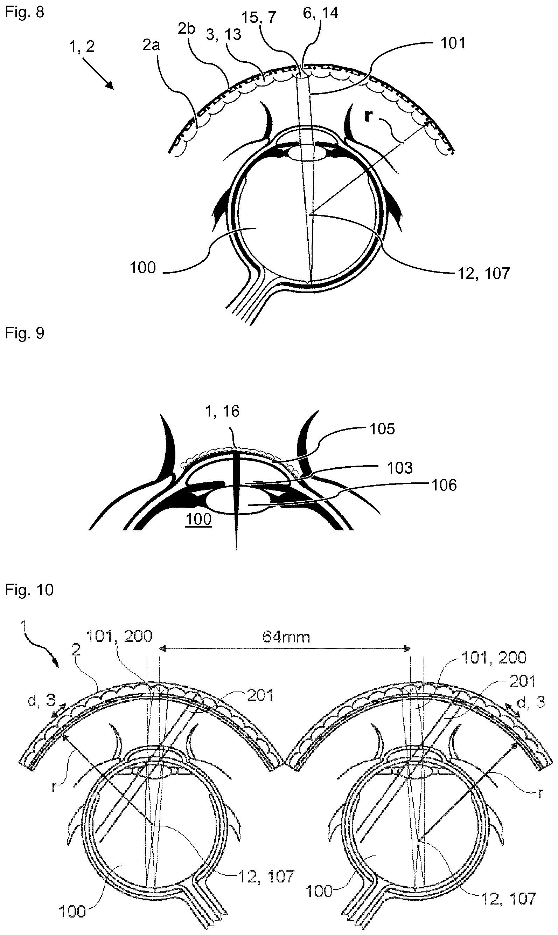

An illustration of the above Table 1 can be seen in Fig. 1. In Fig. 1 a cross-section through the near-eye display 1 is shown, wherein the near-eye display 1 is arranged with its curved screen 2 in front of the eye 100 of a user. The near-eye display 1 can comprise two curved screens 2 such that one screen 2 is arranged in front of each eye 100 (cf. e.g. Fig. 10). This allows for stereo- and 3D-visualization of information to the user.

Without loss of generality, in the following figures only one curved screen 2 is shown. The curved screen 2 has a display side 2a and a backside 2b. The display side 2a is facing towards the users eye 100, while the backside 2b is facing in the opposite direction.

The curved screen 2 comprises a plurality of optical elements 3. Each optical element 3 is composed of a transparent polymer such as PMMA or glass. Each optical element 3 furthermore comprises a central emitter 6, and a collimating optics 7 embedded in the transparent polymer, comprising a concave semi-transparent mirror 4 in form of a semi-transparent, reflective layer 5 that is embedded in the transparent polymer. The reflective layer 5 is a dielectric layer that provides the desired reflectivity.

The optical elements 3 are arranged with a pitch of *d.* A suitable pitch *d* can be estimated considering the following: The pupillary distance between the human eyes 100 is typically around 64 mm. Thus, the radius *r* of a screen 2 placed in front of each eye 100 should be around 30 mm, so that two curved screens 2 arranged next to each other (for each eye one curved screen) are not overlapping. Assuming an AER of 20 pixels per degree, the size of the optical element 3 is 26.2 µm. The central emitter 6 and each side-emitter 8, e.g. QD-LEDs, each have a size of 8.5 µm or smaller. Therefore, in a single optical element 3 it is possible to arrange nine emitters 6, 8. The optical element 3 therefore could comprise one central emitter 6 at the focal point 14 of the collimating optics 7 surrounded by eight side-emitters 8.

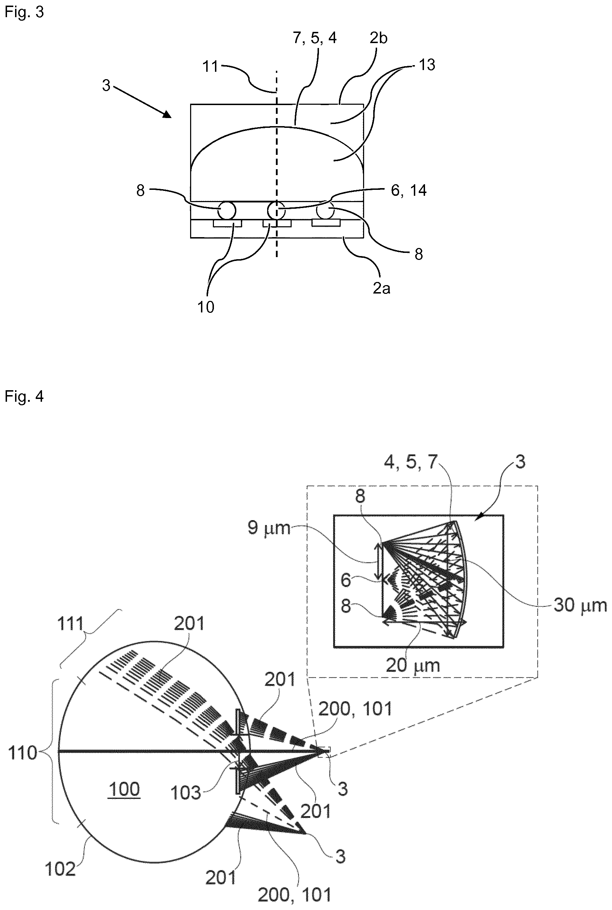

The side-emitters 8 (cf. e.g. Fig. 3) and the central emitter 6 in each optical element 3 are contacted by electrodes 9 (cf. e.g. Fig. 2 or 3) such that they can be turned on and off, switching from a luminous state (on-state) to a dark state (off-state) and vice versa.

The collimating optics 7 is arranged such with respect to the central emitter 6 that emitted light from the central emitter 6 is collimated after passing the collimating optics 7. In this example, collimation is achieved by the semi-transparent reflective layer 5 of the embedded concave mirror 4. The collimated (and back-reflected) light propagates towards the eye 100 of the user. The eye 100 will focus the collimated light on the retina 102, which will generate a point-like visual impression on the retina 102. As the curved screen 2 is configured to emit a plurality of such collimated light beams 101from each optical element 3, the plurality of collimated light beams 101 can hit the retina 102 at different point-like positions. The position where a light beam light hits the retina 102 is defined by the eyes 100 direction of gaze, the angle under which the light beam enters the pupil and other factors. The angle in turn is defined by the curvature or radius r of the curved screen 2 that emits the collimated light beams 101, 200 from the central emitters 6 at particularly a 90° angle with respect to its display side surface 2a. Since the thickness of the reflective layer 5 is comparably thin with respect to the thickness of the surrounding polymer and since the reflective layer 5 is surrounded by refractive index matched polymer material and the curved screen 2 has a uniform thickness, the wavefront of the light coming from the outside world, particularly the backside 2b of the curved screen 2 is not altered by the curved screen 2 and is focused by the lens in the eye 100 onto the retina 102.

As the light beams 200, 201 have a small diameter compared to the pupil 103 diameter, the pupil 103 is not completely filled by the light beam 200, 201 of a single optical element 3 (i.e. it is a large F-number situation). This in turn leads to a large depth of focus. If the user focusses at different distances, the effect on the perceived visual information is negligible and the light beam 200, 201 remains focused on the retina 102.

This exemplary embodiment can be varied by using a fully reflective concave mirror 4 instead of a semi-transparent concave mirror 4. The resulting near-eye display 1 is then non-transparent and can for example be used in VR-applications.

In Fig. 2 a single optical element 3 of the curved screen 2 is schematically shown in a cross-section.

The optical element 3 comprises a transparent polymer, in which the semi-transparent, concave mirror 4 is embedded. The semi-transparent, concave mirror 4 consists of a concave reflective layer 5. This layer 5 is the collimating optics 7 of the optical element 3.

As the central emitter 3 is arranged at the focal point 14 of the collimating optics 7, light emitted from the central emitter 6 is collimated by the collimating optics 7.

The central emitter 6 is contacted by electrodes 9 that consist of a transparent compound such as ITO. Via the electrodes 9 the central emitter 6 can be switched between the on- and off-state, e.g. by applying an electric field or by supplying an electric current or voltage to the central emitter 6. The central and/or side-emitter(s) 6, 8 are arranged on a reflective or an absorbing portion 10 that prevents emission of divergent light of the central and/or side-emitters 6, 8 directly towards the display side 2a of the curved screen 2. Alternatively, the absorbing or reflective portion 10 can be comprised by the central/side emitters 6, 8.

The optical element 3 is optically transparent to the eye 100 and has two planar surfaces that do not alter the wave fronts of light traversing the optical element 3 from the backside 2b to the display side 2a of the curved screen 2. The only focussing element of the optical element 3 is the semi-transparent, concave mirror 4.

The collimating optics 7 can be formed with a parabolic, spherical or aspheric, reflective layer 5.

Whether the layer 5 is semi-transparent or fully reflective depends on the intended use of the near-eye display 1 - for VR-applications a fully reflective layer 5 can be chosen, wherein for VR- and MR-applications, the layer 5 can be chosen semi-transparent.

In Fig. 3, a single optical element 3 of the curved screen 2 is schematically shown in a cross-section. In contrast to the optical element 3 in Fig. 2, the optical element 3 has two side-emitters 8 arranged laterally shifted to the optical axis 11 of the collimating optics 7. The optical axis 11 of the collimating optics 7 is at the same time also the optical axis 11 of the optical element 3.

The optical element 3 comprises eight such side-emitters 8 that are arranged around the central emitter 6. However, in this cross-section only two side-emitters 8 can be seen, as the other side-emitters 8 are arranged in different cross-sectional planes of the optical element 3.

Light emitted by the side-emitters 8 will most likely be less collimated and particularly slightly divergent as compared to the light of the central emitter 6, after passing the collimating optics 7, except when placed at the focal plane of the corresponding collimating optics 7. The focal plane might not be planar, though. Furthermore, after passing the collimation optics 7, the light of the side-emitters 8 propagates at an angle with respect to the optical axis 11 of the optical element 3. Therefore, the light of the side-emitter 8 will hit the retina 102 of the eye 100 at a different location than the light of the central emitter 6.

In the following, the light from the side-emitters 8 is referred to as background light. The background light particularly leads to a more natural viewing impression to the user.

The side-emitters 8 and the central emitter 6 each are controllable in their luminous states, i.e. they can be switched between the on-state and the off state independently of each other and repeatedly.

The side-emitters 8 are essentially the same kind of emitters than the central emitter 6. Consequently, electric contacting and layout of the side-emitters 8 are essentially identical, e.g. using electrodes 9.

In Fig. 4, light rays 200, 201 of two optical elements 3 arranged on the curved screen 2 are shown to illustrate the effect of side-emitters 8. Fig. 4 shows a schematic cross-section of the eye 100, and two optical elements 3 arranged at different positions on the curved screen 2 in front of the eye 100.

The lines extending between the optical elements 3 and the eye 100 are illustrations of light rays 200, 201 associated to the respective emitter 6, 8. The optical element 3 arranged straight in front of the pupil 103 emits essentially three different light ray packets 200, 201. The light ray packet 200 from the central emitter 6 extends straight through the cornea 105, the pupil 103, and the crystalline lens 106 to the retina 102. The light from the central emitter 6 will evoke a point-like visual impression in the centre of the retina 103. The light ray packets 201 from the two side-emitters 8 of the optical element 3 are slightly divergent and propagate at an angle with respect to its corresponding optical element 3 and are blocked by the pupil 103 of the eye 100.

It is noted that perception of a sharp image is already completely achieved by the use of the central emitters 6, the side-emitters 8 are not mandatory in order to project a sharp image on the retina 102 of the user. The image composed only by central emitters 6 passing through the pupil 103 however would induce a tunnel-like viewing experience if the background light form the side-emitters 8 is turned off.

In the boxed region, a magnified view of the rays emitted by the central 6 and the side-emitters 8 in the optical element 3 is shown. Only the rays from the emitters 6, 8 to the reflective layer 5 are shown. The back-reflected rays are not shown. The optical element 3 has a width of 30 µm and a depth of at least 20 µm. The spacing between the central emitter 3 and the side-emitters 8 is 9 µm.

The optical element 3 located below the centrally arranged optical element 3 also emits light rays. The light rays 200 from the central emitter 6 as well as the light rays 201 of one side-emitter 8 are blocked by the pupil 103, such that this light does not reach the retina 102 at all. Only the light 201 of another side-emitter 8 in the optical element 3 extends through the pupil 103 and is projected onto the retina 102.

As long as light from an emitter 6, 8 of the optical element 3 can hit the retina 102, the optical element 3 can be considered to be in the field of view 109 or at least within the peripheral vision portion 111.

The light 201 from this side-emitter 8 is referred to as the background light that induces a natural viewing experience by illuminating the part of the retina 102 that is not covered by the fovea 110 but still perceives light.

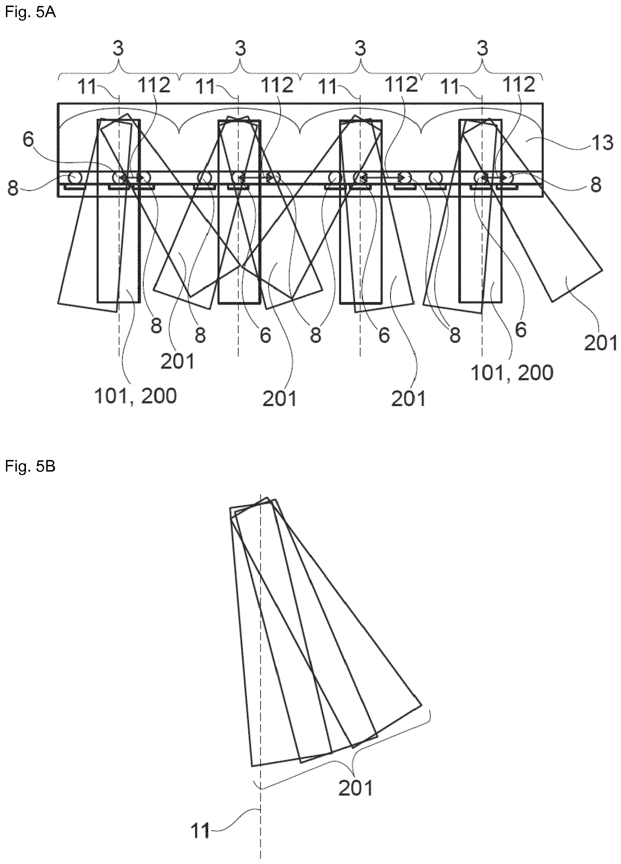

In Fig. 5A an illustration of a plurality of adjacently arranged optical elements 3 is shown. Each optical element 3 comprises one central emitter 6 as well as a plurality of side-emitters 8. In the schematically shown cross-section of the optical elements 3, two side-emitters 8 are arranged left and right of the central emitter 6. The light emitted of respective emitters 6, 8 of each optical element 3 is depicted as squares 200, 101 or cones 201. While the light emitted of the central emitters 6 propagates straight down and is collimated, the light of the neighbouring side-emitters 8 propagates along different angles for each optical element 3. This is because each side-emitter 8 in this embodiment is arranged at different distances 112 to the optical axis 11 of the corresponding collimating optics 7. This way, the background light can be continuously distributed over an extended area of the retina 103.

Fig. 5B shows a magnified view of Fig. 5A. In this view only the light of the side-emitters 8 arranged to the right of the central emitter 6 of Fig. 5A is shown. As can be seen, the light cones 201 of the side-emitters 8 cover an extended solid angle. This extended solid angle will translate in an extended illuminated area on the retina 103.

This embodiment allows for a more natural viewing experience (i.e. less tunnel-like) using the near-eye display 1 according to the invention.

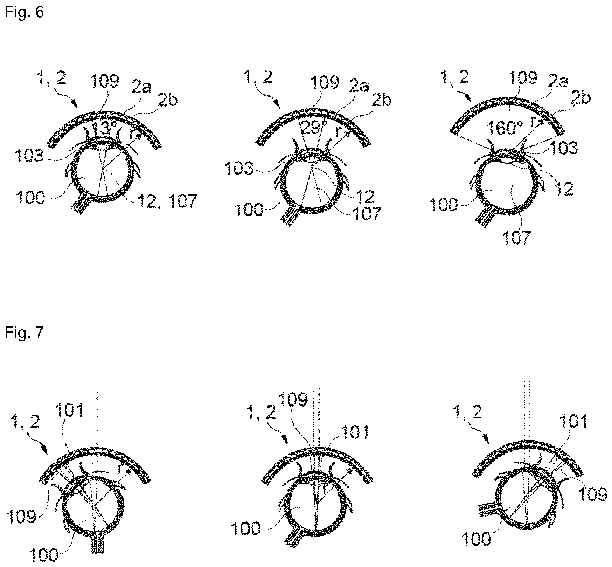

In Fig. 6 the dependency of the field of view 109 on the radius *r* of the curved screen 2 and the distance of the curved screen 2 to the eye 100 is schematically shown. The field of view 109 is furthermore influenced by the diameter of the pupil 103. This is not shown in the current figure.

In case the curved screen 2 is arranged such that the centre of the radius of the curved display 12 is located, overlaps with the centre 107 of the eye ball 100 the field of view 109 of light generated by the central emitters covers 13° (cf. e.g. left panel of Fig. 6). Note that, the number of optical elements 3 with central emitters 6 emitting light passing through the pupil 103 does not correspond to the actual number of optical elements 3, as the drawing is not to scale.

In the middle panel of Fig. 6 the curved screen 2 is arranged further away from the eye 100. The resulting field of view 109 for the central emitters covers 29°. When the curved screen 2 is arranged even further away, as shown in the right panel of Fig. 6, the field of view 109 extends over 160°. While the last configuration might seem to be ideal, it is extremely sensitive to the rotation of the eye 100 and when the eye ball 100 is rotated, all light from the central emitters 6 is blocked by the pupil 103. Therefore, as the eye 100 can turn and look along different directions, the curved screen 2 might be arranged such that independent of the eyes 100 position and direction of gaze the screen 2 is within the field of view 109 of the eye 100.

This situation is depicted in Fig. 7 where the centre 107 of the eye ball 100 overlaps with the centre of the radius 12 of the curved screen 2. In Fig. 7 the eye 100 assumes three different positions. In the left panel of Fig. 7 the eye 100 looks downwards, wherein in the middle panel the eye 100 looks in a straightforward direction, while in the right panel the eye 100 looks upwards. In all three positions, the curved screen 2 is within the field of view of the eye 100. This way, a realistic and immersive viewing experience can be achieved. Note that the curved screen 2 extends particularly spherically around the eye 100 such that similar sketches could be drawn for the left or right gazing eye 100.

The near-eye display 1 can be used as an augmented reality (AR) or a mixed reality (MR) display. For augmented or mixed reality applications the curved screen 2 should be at least semi-transparent such that the environment can be perceived by the user. When using a curved screen 2 comprising optical elements 3 whose collimating optics 7 is a concave mirror 4, the mirror 4 should be semi-transparent in order to grant unhindered sight through the screen 2.

In case the near-eye display 1 according to the invention should be used in a virtual reality (VR-) application it might be of advantage that the screen 2 is not transparent such that light from the environment cannot reach the user's eye 100. In this case, the concave mirror 4 should not be transparent but completely reflective.

Embodiments based on a concave mirror 4 - semi-transparent or fully reflective - are shown in Fig. 1 to Fig. 7.

Alternatively to the collimating optics 7 based on the concave mirror 4, it is also possible to form the collimating optics 7 of each optical element 3 as a lens 15.

This lens-based embodiment is shown in Fig. 8. When using lenses 15, the wavefront of light propagating from the backside 2b to the display side 2a of the screen 2 will be distorted by the lenses 15 of the optical elements 3. Therefore, it will not be possible to discern the environment for the user of a lens-based near-eye display 1. Consequently, the lens based near-eye display 1 is particularly suitable for VR-applications.

In Fig. 8 each optical element 3 has a convex lens 15 as a collimating optics 7. The lenses 15 are formed by the transparent polymer of the optical element 3, wherein the surface of the optical element 3 on the display side 2a is curved accordingly, such that a collimating lens 15 is formed at the polymer-air interface. The central emitter 6 and the side-emitters 8 are arranged closer to the backside 2b of the screen 2 than the corresponding lens 15. Contacting and activation of each emitter 6, 8 can be done with appropriate electrodes 9, wherein in case the backside 2b of the screen 2 is non-transparent, the electrodes 9 don't have to be transparent.

According to the lens-based near-eye display 1, the light of the central emitters 6 is directly collimated and not back-reflected by a concave mirror 4. Particularly when semi-transparent mirrors 4 are used, some light of the central 6 and side-emitters 8 might be transmitted by the semi-transparent mirror 4 through the backside 2b of the screen 2. This is not the case in the lens-based embodiment. Lenses 15 can also be GRIN lenses. This embodiment would allow even surfaces of the lens 15.

In Fig. 9, the near-eye display 1 is formed as a contact lens 16. The contact lens 16 is directly worn on the eye 100. There is no substantial amount of air between the near-eye display 1 and the eye 100. This miniaturised version of a near-eye display 1 can be used in various applications. No head-on device such as VR- or AR-goggles is needed.

The general layout of such a contact lens 16 is identical to the layout of the near-eye display 1 that is not worn directly on the eye 100. The curved screen 2 comprises a plurality of optical elements 3, each optical element 3 comprising the central emitter 6 and collimating optics 7. In case the near-eye display 1 is a contact lens 16, the near-eye display 1, and in particular the collimating optics 7, can be based on concave mirrors 4, wherein each optical element 3 comprises a concave mirror 4. This way, the display side 2a which is in contact with the eye 100, can be planar.

According to another exemplary embodiment of the invention, the near-eye display 1 comprises two screens 2, each screen 2 associated to one eye 100, wherein each screen 2 is arranged such that the field of view 109 of each eye 100 is covered at least partially by the corresponding screen 2. Such an embodiment is shown in Fig. 10. The two curved screens 2 are arranged laterally shifted by 64 mm, such that the centre of each screen 2 is arranged in front of one eye 100 of the user.

Such an arrangement can be used to display three-dimensional information to the user.

The depicted components of the two screens 2 are essentially the same as for the screens 2 disclosed in the above- mentioned embodiments and are not repeated at this point. The reference numerals refer to the same entities.

### List of reference signs

- 1: near-eye display
- 2: curved screen
- 2a: display side of the curved screen
- 2b: backside of the curved screen
- 3: optical element, pixel
- 4: concave mirror
- 5: reflective layer
- 6: central emitter
- 7: collimating optics
- 8: side-emitter
- 9: contacting electrodes
- 10: reflective or absorbing area
- 11: optical axis of the collimating optics and the optical element
- 12: radial centre of the curved screen / centre of the curved screen
- 13: transparent polymer
- 14: focal point of collimating optics
- 15: convex lens
- 16: contact lens
- 100: eye
- 101: collimated light beam
- 102: retina
- 103: pupil
- 105: cornea
- 106: crystalline lens
- 107: centre of eye ball
- 109: field of view
- 110: fovea,
- 111: peripheral vision portion
- 112: distance from optical axis / central emitter
- 200: light ray of central emitter
- 201: light ray from side-emitter

## Claims

1. A near-eye display (1) comprising the following components:
- At least one curved screen (2), comprising a plurality of optical elements (3), each optical element (3) comprising a controllable central emitter (6) configured to emit light;
- For each central emitter (6), a corresponding collimating optics (7) comprised by the corresponding optical element (3), wherein the corresponding collimating optics (7) has an optical axis (11) and is arranged such with respect to the central emitter (6) that emitted light from the central emitter (6) is collimated and the collimated light propagates parallel to the optical axis (11) of the corresponding collimation optics (7).

2. Near-eye display (1) according to claim 1, wherein each optical element (3) further comprises controllable side-emitters (8) arranged around the central emitter (6) and wherein emitted light of the side-emitters (8) propagates at an angle with respect to the optical axis (11) of the corresponding collimating optics (7), when the light leaves the corresponding optical element (3).

3. Near-eye display (1) according to claim 2, wherein the side-emitters (8) are arranged in a predefined pattern around the central emitter (6), wherein the side-emitters (8) are arranged such that emitted light of the side-emitters (8) propagates at predefined angles with respect to the optical axis (11) of the corresponding collimating optics (7), when the light leaves the corresponding optical element (3).

4. Near-eye display (1) according to one of the claims 2 or 3, wherein a pattern in which the side-emitters (8) are arranged with respect to the optical axis (11) of the corresponding optical element (3) and particularly the distances (112) of the side-emitters (8) to the optical axis (11) of the corresponding collimating optics (7) of the optical element (3) is/are different for adjacent optical elements (3) on the screen (2).

5. Near-eye display (1) according to one of the preceding claims, wherein the at least one curved screen (2) is transparent or semi-transparent.

6. Near-eye display (1) according to one of the preceding claims, wherein each optical element (3) comprises a transparent polymer or glass.

7. Near-eye display (1) according to one of the preceding claims, wherein each collimating optics (7) comprises or is a, particularly semi-transparent, concave mirror (4), wherein the concave mirror (4) comprises or consists of a reflective, particularly semi-transparent layer (5).

8. Near-eye display (1) according to one of the preceding claims, wherein the at least one curved screen (2) is configured such that a wavefront of light traversing the curved screen (2) remains substantially unaltered.

9. Near-eye display (1) according to one of the claims 1 to 6, wherein each collimating optics (7) is or comprises a collimating lens (15) that is particularly formed by the polymer or glass.

10. Near-eye display (1) according to one of the preceding claims, wherein the at least one curved screen (2) is cylindrical or spherical and has a radius (r) between 70 mm and 15 mm, particularly wherein the radius (r) is between 40 mm and 30 mm.

11. Near-eye display (1) according to one of the preceding claims, wherein the near-eye display (1) is or is comprised in a contact lens (16).

12. Method for displaying information with the near-eye display (1) according to one of the preceding claims, comprising the steps of:
- Estimating a field of view (109) of a user looking at the near-eye-display (1);
- Activating central emitters (6) and particularly the side-emitters (8) that are within the field of view (109).

13. Method according to claim 12, wherein only selected central and/or selected side-emitters (6, 8) are activated, wherein the selected central emitters (6) and/or selected side-emitters (8) are arranged in at least one portion of the at least one curved screen (2) from where emitted light from the respective emitters (6, 8) can enter the eye (100) through the clear aperture of the pupil (103) of the eye (100) and be projected on the retina (102).

14. Method according to claim 12 or 13, wherein the field of view (109) is estimated from an estimated position and/or direction of gaze of the eyes (100), wherein the eye (100) position and or direction of gaze is estimated by an eye-tracking device.

15. Method according to one of the claims 12 to 14, wherein an image is displayed at least within the field of view (109) or the at least one portion of the curved screen (2) from where emitted light from the selected central (6) and selected side-emitters (8) can traverse the clear aperture of the pupil (103), wherein an in-focus portion and an out-of-focus portion of the image are determined from the image, wherein the out-of-focus portion is digitally blurred before the image is displayed with the near-eye display (1).
